# EUROPEAN PATENT SPECIFICATION

(11) **EP 2 346 344 B1**
(45) Date of publication and mention of the grant of the patent: **21.01.2015**
(21) Application number: 09752444.1
(22) Date of filing: 30.10.2009
(51) Int. Cl.: A23C 11/06, A23C 21/04, A23C 21/02

(54) **PREPARATION OF LIQUID CONCENTRATE MILK-SUBSTITUTE**
HERSTELLUNG EINES MILCHERSATZ-FLÜSSIGKONZENTRATS
PRÉPARATION D'UN SUBSTITUT DU LAIT SOUS FORME DE CONCENTRÉ LIQUIDE

(30) Priority: 30.10.2008 GB 0819917; 30.10.2008 GB 0819920
(43) Date of publication of application: 27.07.2011
(73) Proprietor: Wright-Agri Industries Limited, Nantwich, Cheshire CW5 5EW (GB)
(72) Inventor: PRIEST, Leslie, Cheshire CW5 5EW (GB); WRIGHT, John, Cheshire CW5 5EW (GB)
(74) Representative: Jones, Bruce Graeme Roland
(86) International application number: PCT/GB2009/002590
(87) International publication number: WO 2010/049704

(56) References cited:
- EP-A1- 1 894 470
- WO-A1-2004/110159
- CA-A1- 1 183 479
- GB-A- 2 170 984
- US-A- 3 852 496

## Description

### BACKGROUND TO THE INVENTION

### 1. FIELD OF THE INVENTION

The present invention relates to the manufacture of milk-substitute foods from milk whey and to milk-substitute foods thus manufactured. Typically, though not exclusively, such foods are used to feed animals such as calves.

Requirements for calf milk are met, optimally, by milk from cows. Along with other species of animal milk, cow's milk, however, is valuable as a source of food for humans, both in its original form, and also when modified to make cheese. Accordingly, it is a known requirement in the dairy industry to find a suitable replacement milk for animal milk.

### 2. DESCRIPTION OF RELATED ART

International Application WO2004/110159 (the contents of which are hereby incorporated in its entirety by reference) discloses the manufacture of milk-substitute in the form of a liquid concentrate from whey. Whey is the by-product of the process of making cheese, usually from cow's milk, and is a residue of the cheese-making process following the removal of both the majority of the fats which are of beneficial value to a calf, and casein, the predominant protein in cow's milk. According to WO2004/110159, milk whey is subjected to a lactic acid fermentation in order to convert the lactose therein to lactic acid, and a hydrolysis of lactose within the whey to create the isomeric sugars glucose and galactose. One or more additives, such as organic acids other than lactic acid are then added to the resultant milk-substitute in order to provide stability and longevity. Different kinds of cheese-making process produce different kinds of whey. The manufacture of cheeses such as cheddar cheese produces a whey which is largely pH neutral, and is known as sweet whey; the manufacture of cottage cheese produces a more acidic whey having a lower pH, known colloquially as acid whey. The method disclosed in WO2004/110159 contemplates the use of sweet whey (of the kind which is produced as a bi-product in the manufacture of cheddar cheese and the like), a substance which typically has a pH in the region of 6.0. The step of fermenting lactose into lactic acid causes the pH to drop to a value in the region of 4.0, at which point, the bacteria employed to cause the fermentation to take place begin to cease to have any effect.

### SUMMARY OF THE INVENTION

A first aspect of the present invention lies in an appreciation of the fact, that when acid whey is used as a starting material, fermentation provided by the bacteria as disclosed in WO2004/110159 is not required. Because acid whey typically has a pH in the region of 4, its acidity is such as to prevent, or at least minimise, the effect of any bacteria within the whey which would otherwise cause fermentation to take place. Accordingly, when acid whey is used as a starting substance, it can be converted to milk-substitute by the hydrolysation of lactose, avoiding the need for the fermentation step. Preferably, additives may then be added to the resultant liquid, which is preferably then evaporated to produce a concentrate.

The present invention provides a method of manufacturing milk substitute in liquid concentrate form comprising the steps of:
hydrolysing lactose within whey or a whey derivative to create simple sugars;
adding protein;
reducing the pH of the resultant liquid to a pH at or below pH 5.0;
characterised in that:
the whey or whey derivative is acid whey and the method does not include a step of bacterially fermenting lactose into lactic acid.

The whey may be whey from cow's milk, but may equally be from any suitable animal, including but not limited to goat, sheep or buffalo. The permeate is hydrolised to break lactose in the permeate into the sugar isomers glucose and galactose. Thereafter, it is preferably blended with one or more protein fractions and one or more acids. Preferably the additional acids are organic acids. The resultant mixture may then be reduced to a desired concentration.

### BRIEF DESCRIPTION OF DRAWINGS

Embodiments of the present invention will now be described, by way of example, and with reference to the accompanying drawings, in which:
Fig. 1 is a flow chart illustrating the operation of a first embodiment of method according to the present invention;
Fig. 2 is a flow chart illustrating the operation of a further embodiment of method according to the present invention; and
Fig. 3 is a flow chart illustrating a modification to the operation of the method of Fig. 2.

### DESCRIPTION OF PREFERRED EMBODIMENTS

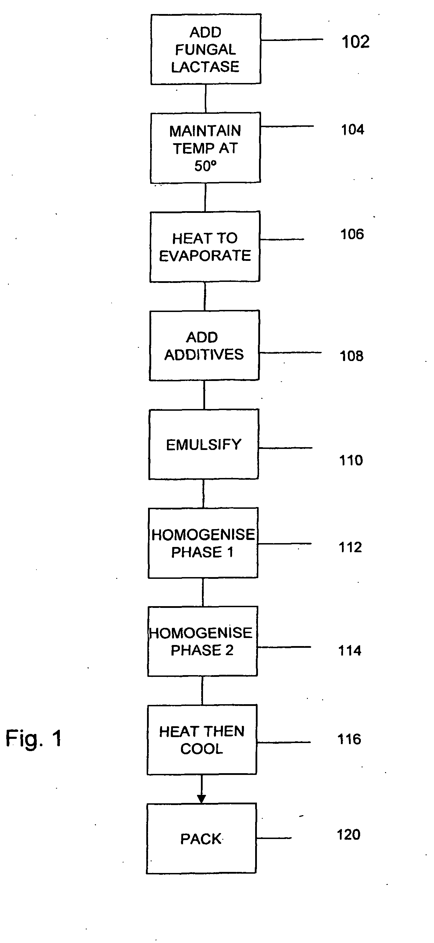

Referring now to Fig. 1, a first embodiment of the present invention will now be described, in which acid whey, also known as sour whey, is used as a starting material. Sour whey is produced in the manufacture of cream or cottage cheese. Typically, such whey has a dry matter content of around 5%. In order to perform hydrolysis (this being the conversion of lactose to glucose and galactose), fungal lactase is added to the sour whey at step 102, in the amount of 0.3 grams per kilogram of lactose present in the whey. The resultant mixture is then maintained at a temperature of in the region of 50°C at step 104, and under additional (i.e. above atmospheric) pressure. This process is continued until at least 50%, and more preferably at least 60% conversion rate of lactose to glucose and galactose had taken place.

Following the hydrolysis, the mixture then undergoes evaporation at step 106 in order to increase its concentration level, from a dry matter content in the region of 10%, to a dry matter content in the region of 35% to 50%. Preferably, during the evaporation step, the mixture is heated to over 72°C for 10 to 20 seconds during the passage of the mixture through the preheaters in the evaporator. This process inactivates any lactic acid bacteria.

Thereafter, the concentrate is maintained at a temperature of 45°C to 60°C and, at step 108, the following additives introduced: minerals, amino acids, antioxidants, vegetable or animal fats (or a mixture of the two), syrup (preferably glucose syrup), amino acids, fat and water soluble vitamins, pectin (to act as a binding agent) and various flavourings. During this step, 3% of a 20% mixture of propionic acid and citric acid until a pH of in the region of 3.8 to 4.1 was reached.

After premixing the vegetable and animal protein hydrolysates with a static mixer and/or a thorax mixer, emulsification takes place at step 110 for 15 minutes in a collecting tank with a slowly revolving mixing gear (revolving at between 2 and 10 revolutions per minute). The resultant mass is homogenised in a first phase at step 112 at 300 bar; and subsequently at 75 bar in a second phase. The fat distribution within the emulsion is then microscopically examined. Thereafter, the product was heated by means of FSH or 1 second at 148°C, cooled to 65°C and then packaged.

Depending upon the dry matter content and the base materials used, the resultant product is found, typically to have a storage life of between 8 and 12 weeks.

The above-described example illustrates one preferred manner of manufacture, which may be modified in a number of ways. For example, the extent of conversion of lactose to lactic acid by means of the hydrolysis is preferably at least 25%, and therefore, between 25% and 99% of the initially-present lactose. More preferably, hydrolysis will occur to a degree between 60% and 90%, and more preferably still to between 65% and 85%. The extent of concentration of the finished product will preferably include at least 20%, more preferably still, at least 25%, and yet more preferably at least 40% of dry matter. The pH of the concentrate will preferably be in the range of 3.0 to 4.8 and more preferably in the range of 3.8 to 4.5.

Typically, the organic acid present is in the range of a ratio of 1:30 to 8:1 in relation to the presence of lactic acid, and more preferably 1:15 to 5:1 and yet more preferably still 1:10 to 5:1.

A further embodiment of the present invention relates to the use of an alternative starting material for the creation of a calf milk substitute. Whey, whether acid or sweet, contains further proteins. The extent to which a protein can be absorbed and incorporated into the cells of an assimilating organism is known as the 'Biological Value' of the protein and can be thought of, from a lay perspective, as a measure of the 'usability' of a protein. Whey protein from cow's milk is currently believed have the highest Biological Value of all for humans. As a result, whey is frequently treated to remove its protein. The removed proteins are then sold, separately, as a nutritional supplement, for example by bodybuilders. The residual whey, from which the protein has been removed, is known as whey permeate. Whey permeate is a reduction agent, in that, upon contact with water it has the action of removing oxygen. Emptying it into water courses would be harmful to marine life. Accordingly, whey permeate is categorised as a hazardous waste material and it can be acquired cheaply, or even upon the payment of a fee to the collector.

Thus a first embodiment of the present invention discloses a method of manufacturing milk-substitute in liquid concentrate form from acid whey, which method does not require the introduction of bacteria for fermentation purposes comprising the steps of: hydrolising the whey, thereby to convert at least 25% of the lactose initially present therein to lactic acid; concentrating the resultant hydrolised milk whey; and adding at least one organic acid other than lactic acid. Preferably the hydrolysis is the enzymatic hydrolysis with lactase. The method of the embodiment preferably comprises the step of emulsifying the concentrate. The concentrate is preferably homogenized. Typically, though not necessarily, the concentrate has a pH in the range 3.0 - 5.6; preferably in the range 3.8 - 4.5; and more preferably in the range of 4.0 - 4.2. The method of the embodiment preferably includes the step of adding at least one organic acid so that the ration of added organic acid to lactic acid is in the range 1:30 to 8:1; and more preferably so that the ratio of added organic acid to lactic acid is in the range 1:15 and 5:1.

In accordance with a further embodiment of the present invention, whey permeate ( and being permeate of either sweet whey, acid whey, or a combination of both), which is essentially a solution of lactose together with any residual proteins which have not been removed as part of a process of manufacture of protein nutritional supplements, is used as a starting material. The whey permeate undergoes a process of hydrolysis at step 202, by the addition of water, to create glucose and galactose sugars. In the present example the whey permeate is derived from cow's milk but whey permeate may equally be derived from the milk of any other suitable species of animal, including sheep, goat and buffalo. preferably, though not essentially, the water for the process comes from the solution itself. In one implementation, the action of severing the lactose molecule into the two sugar isomers takes place under the action of an enzyme. An example of such an enzyme is one produced from *Aspergillus Oryzae,* and is known commercially as tolerase granulate, produced by DSM. Tolerase granulate operates optimally at relatively low pH values, with the preferred pH being in the region of pH 4. Where acid whey or acid whey permeate is to be hydrolised, this proves to be no impediment to the process, since the pH of acid whey is, ordinarily, typically close to this level. Where, however, sweet whey or sweet whey permeate is employed, it may be necessary to perform the step of adding acid to the whey permeate at this stage - thereby obviating the need to do so as what would otherwise be a final step in the process. The process of hydrolysing lactose into simple sugars has two beneficial effects in relation to the creation of a liquid concentrate for use, for example, as calf-milk replacement. Firstly, by severing the lactose into two sugars, the resultant liquid tastes sweeter and therefore more palatable to the animal. Secondly, each transformation of a molecule of lactose into two sugar molecules has the effect of increasing the osmolarity of the resultant solution - since the ratio of molecules of solute to solvent increases. The effect of this increase in osmolarity is such as to render the solution hypotonic with respect to any bacteria that may be within the solution, meaning that water passes by osmosis across the semi-permeable membrane of the cells of the bacteria into the solution, thus harming the bacteria and impeding their action. Consequently, the resultant solution has greater longevity.

The degree of conversion of lactose will be such that preferably, in the region of 25% of the lactose is converted to sugars. This rate of conversion will provide an appropriate increase in the osmolarity while leaving sufficient of the lactose in solution to provide the necessary nutritional benefits for rearing animals.

Once hydrolised, the solution is then blended with one or more proteins at step 204. This is desirable since the process of creating whey permeate removes the majority of proteins with significant biological value; the addition of further protein is therefore preferable in order to assist in rearing a healthy calf. In one embodiment, wheat or soya protein may be added. Protein from other milk products may, however, also be used as desired and depending upon the purpose for which the milk-substitute is required. Those proteins which are introduced, however, are likely to be significantly less expensive than the value of those which were extracted in the course of the process which produced the permeate in the first place. The amount of protein added can, according to a preferred embodiment, be gauged by reference to the overall concentration (measured in terms of weight to volume) of the milk substitute. One preferred embodiment provides a concentration in the region of 40%, bearing in mind that it is possible that at least some of the protein added remains in suspension. Higher concentrations are also possible, though as the concentration increases significantly beyond 40%, the viscosity of the resulting concentrate becomes a potentially more significant factor in relation to handling. Concentrations of 40% and upwards are thought to provide a shelf life of up to 4 months. Where shelf life is a less significant factor, lower concentrations can be adopted.

Finally, one or more acids may be added to the solution. This may or may not be essential depending, variously, upon the pH of the liquid (thus, where acid whey or whey permeate is employed, the pH may already be sufficiently low) and degree of osmolarity provided by hydrolisation. Where required, however, the function of additing the acids is to lower the pH to a level at which only minimal bacterial action is possible. Ideally, therefore, whichever acids are added should have a robust buffering action in order to prevent any increase in pH over the period of storage of the resultant liquid concentrate. Organic acids are found to have good buffering action and may be preferred, although they can be expensive. Propionic acid, which is naturally occurring by-product of the assimilation within a calf's obamasum ('fourth stomach') of milk proteins, is one example. One or more inorganic acids, however, may also suffice, one example of which is phosphoric acid, which is frequently used as a food additive in humans (for example, in colas).

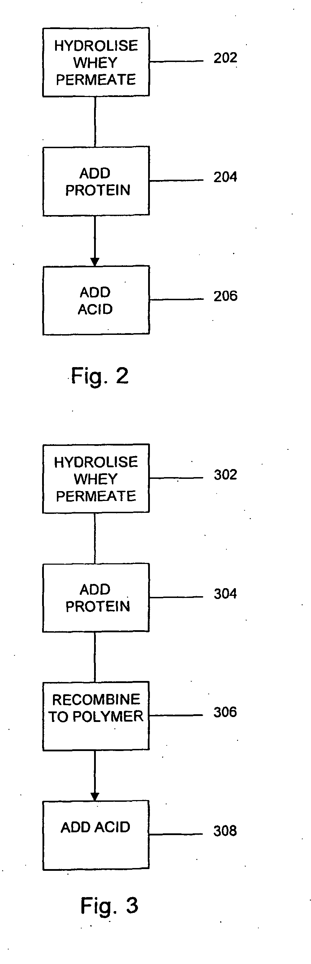

In accordance with a further embodiment, illustrated in Fig. 3, an alternative enzyme is employed, which has a somewhat different action. An enzyme available from Danisco under the trade name GC288 has been found to have an action which, as well as breaking lactose into glucose and galactose, has a recombinative action which operates to create, out of the simple sugars which result from the hydrolisation of the lactose, polymer sugars in the form of oligosaccharides. Oligosaccharides, such as galactooligosaccharide and fructooligosaccharide, are known to have beneficial effects on the growth of intestinal microflora, such as *lactobacillus,* a prevalence of which is thought to assist a reduction in harmful coliform intestinal bacteria. It is therefore possible that creating a calf-milk substitute which contains a concentration of oligosaccharides may enable a reduction, or even the elimination of a need to administer antibiotic drugs to calves. A further embodiment of the present invention provides both a method of manufacture of calf-milk substitute in which one or more enzymes are used to hydrolise lactose which also have the action of recombining a proportion of the resultant simple sugars into polymer, oligosaccharide sugars. This additional step is illustrated schematically in Fig. 3 as step 306. GC 288 operates a significantly higher pH values than Tolerase, being operational above pH 4.5 or 4.6 and preferably operating in the region of pH 4.8 to 5.2. Accordingly, depending upon the inherent pH of the whey or whey permeate whose lactose it is sought to hydrolise, the addition of acids may possibly be deferred until the latter stages of the process, where the addition of acids is required - at step 308.

It has been found that the extent of recombination is dependent upon the concentration of the solution to which the enzyme is added; the more concentrated the solution, the greater the extent of the recombinative action. Therefore, for a larger percentage of polymer oligosaccharide sugars in the resultant concentrate, it is desirable to increase the concentration. However, this may have a potentially deleterious effect on the shelf life of the resultant concentrate as a result of the simultaneous action of two, mutually opposing effects. As stated above, ordinarily, as the solution increases in concentration, the osmolarity increases - thus increasing the shelf life of the liquid concentrate as a consequence of the resulting reduction in bacterial concentration. However, the action of recombining simple sugars to oligosaccharide polymers has the reverse effect upon the osmolarity, since it reduces the number of molecules of solute in solution. Whether, when employing an enzyme with a recombinative action in conjunction with increasing the concentration of the resultant solution therefore acts, overall, to increase or decrease the shelf life of the concentrate thus produced will therefore depend upon the precise levels of enzyme present and concentration levels of any particular mixture.

Where high levels of oligosaccharide are required and, as a result, the osmolarity of the solution decreases to a point where bacteria may flourish, this effect may be capable of being offset by the inclusion of a higher level of acidity within the solution to inhibit bacterial growth, provided that the acidity is not increased in a manner or to an extent which results in the concentrate becoming unpalatable to calves.

The use of an appropriate enzyme to create sugar polymer oligosaccharides in accordance with this second embodiment is possible with acid whey, or whey permeate from the milk of any suitable animal species. Where acid whey is employed, the step of blending further proteins into the concentrate may be omitted, since the whey will already contain many beneficial proteins, other than casein.

In accordance with a further modification, where, in particular circumstances, it is specifically desired to include sugar polymers such as oligosaccharides in milk-substitute, these may be directly blended into the milk substitute, for example shortly before feeding. This has the advantage of retaining the greater longevity of the milk substitute while nonetheless providing potentially beneficial polymer sugars to the gut of the animal.

Accordingly, further embodiment of the present invention comprise the steps of; hydrolysing lactose within whey or a whey derivative to create simple sugars from the lactose; and recombining some of the simple sugars into oligosaccharide polymers. Preferably the method comprises the step of adding further organic acid to reduce the pH.

Yet a further embodiment provides treating whey permeate with an enzyme thereby to increase its osmolarity; adding one or more proteins capable of assimilation within a calf's stomach; reducing the pH of the liquid to a pH of no greater than 5.

Where the specification discloses modifications to embodiments, the applicability of those modification is not to be limited to the embodiments in connection with which they were first disclosed, and modifications are more generally applicable to all disclosed embodiments.

## Claims

1. A method of manufacturing milk-substitute in liquid concentrate form comprising the steps of:
hydrolysing lactose within whey or a whey derivative to create simple sugars;
adding protein;
reducing the pH of the resultant liquid to a pH at or below pH 5.0;
**characterised in that**:
the whey or whey derivative is acid whey and the method does not include a step of bacterially fermenting lactose into lactic acid.

2. A method according to claim 1 wherein the whey or whey derivative Is derived from milk from one of a cow, sheep, goat and buffalo.

3. A method according to claim 1 or claim 2 wherein 25% of the lactose is hydrolysed to create simple sugars.

4. A method according to any one of the preceding claims wherein the step of reducing the pH comprises adding at least one acid.

5. A method according to claim 4 wherein the acid is an organic acid.

6. A method according to claim 4 or claim 5 wherein the acid has a good buffering action.

7. A method according to any one of the preceding claims wherein the ph of the resultant liquid is reduced to below pH 4.6.

8. A method according to any one of the preceding claims wherein the step of hydrolysing lactose includes the use of an enzyme.

9. A method according to claim 8 wherein the enzyme operates optimally below pH 4.5.

10. A method according to claim 9 wherein the step of lowering the pH is performed prior to the step of hydrolysing lactose using the enzyme.

11. A method according to claim 10 wherein the protein Is one of wheat and soya protein.

12. A method according to any one of the preceding claims wherein the liquid has a concentration of 30% weight by volume or greater.

13. A method according to any one of the preceding claims further comprising the step of adding at least one polymer sugar to the liquid.

14. A method according to any one of claims 1 to 12 further comprising the step of recombining some of the simple sugars created by hydrolysis of lactose to create polymer sugars.

15. A method according to claim 13 or claim 14 wherein the polymer sugar is an oligosaccharide.

## Patentansprüche

1. Ein Verfahren zur Herstellung von konzentriertem Milchersatz in flüssiger Form, welches folgende Prozesse einbezieht:
Lactosehydrolyse innerhalb von Molke oder einem Molkenderivat zur Herstellung von Einfachzucker;
Zugabe von Protein;
Verringerung des pH-Wertes der gewonnenen Flüssigkeit zu einem pH-Wert von pH 5.0 oder weniger;
**dadurch gekennzeichnet:**
**dass** es sich bei der Molke oder dem Molkenderivat um Sauermolke handelt, und das Verfahren keinen Prozess enthält, bei dem durch bakterielle Lactosegärung Milchsäure gewonnen wird.

2. Ein Verfahren entsprechend Punkt 1 der Forderung, bei dem die Molke oder das Molkenderivat dem Milch von jeweils einer Kuh, einem Schaf, einer Ziege, und einem Büffel entstammt.

3. Ein Verfahren entsprechend Punkt 1 oder 2 der Forderung, bei dem 25 % der Lactose zur Herstellung von Einfachzucker hydrolisiert ist.

4. Ein Verfahren entsprechend irgendeines vorgenannten Punktes der Forderung, bei dem der Prozess zur Verringerung des pH-Wertes zugleich mit der Zugabe von mindestens einer Säure verbunden ist.

5. Ein Verfahren entsprechend Punkt 4 der Forderung, bei dem es sich bei der Säure um eine organische Säure handelt.

6. Ein Verfahren entsprechend Punkt 4 oder 5 der Forderung, bei dem die Säure eine gute Pufferwirkung hat.

7. Ein Verfahren entsprechend irgendeines vorgenannten Punktes der Forderung, bei dem der pH-Wert der gewonnenen Flüssigkeit auf unter pH 4.5 verringert wird.

8. Ein Verfahren entsprechend irgendeines vorgenannten Punktes der Forderung, bei dem der Prozess der Lactosehydrolyse die Nutzung eines Enzyms beinhaltet.

9. Ein Verfahren entsprechend Punkt 8 der Forderung, bei dem das Enzym bei unter pH 4.5 optimal wirkt.

10. Ein Verfahren entsprechend Punkt 9 der Forderung, bei dem der Prozess zur Verringerung des pH-Wertes, vor dem Prozess der Lactosehydrolyse unter Nutzung des Enzyms, stattfindet.

11. Ein Verfahren entsprechend Punkt 10 der Forderung, bei dem es sich beim Protein um ein Weizen- und ein Sojaprotein handelt.

12. Ein Verfahren entsprechend irgendeines vorgenannten Punktes der Forderung, bei dem die Flüssigkeit eine solche Konzentration aufweist, dass das Volumen 30 % oder mehr des Gewichtes ausmacht.

13. Ein Verfahren entsprechend irgendeines vorgenannten Punktes der Forderung, das zusätzlich den Prozess einschließt, der Flüssigkeit mindestens ein Polymerzucker hinzuzufügen.

14. Ein Verfahren entsprechend irgendeines Punktes von 1 bis 12 der Forderung, das zusätzlich den Prozess einschließt, durch Neuverbindung einiger der Einfachzucker, welche durch Lactosehydrolyse gewonnen wurden, Polymerzucker herzustellen.

15. Ein Verfahren entsprechend Punkt 13 oder 14 der Forderung, bei dem es sich beim Polymerzucker um ein Oligosaccharid handelt.

## Revendications

1. Une méthode de fabrication de succédané de lait sous forme de concentré liquide comprenant les étapes suivantes :
un lactose hydrolysé dans un lactosérum ou un dérivé de lactosérum pour créer des sucres simples ;
en ajoutant une protéine ;
en réduisant le pH du liquide résultant à un pH inférieur au pH 5.0 ;
**caractérisé en ce que** :
le lactosérum ou le dérivé de lactosérum dans le lactosérum acide n'inclut pas l'étape de lactose fermenté bactérien dans l'acide lactique.

2. Une méthode conformément à la revendication 1 ou le lactosérum ou dérivé de lactosérum est dérivé du lait d'une vache, d'un mouton, d'une chèvre et d'un Buffalo.

3. Une méthode selon la revendication 1 où la revendication 2 où 26 % du lactose est hydrolysé afin de créer des sucres simples.

4. Une méthode selon n'importe laquelle des revendications précédentes où l'étape consistant à réduire le pH comprend l'ajout d'au moins un acide.

5. Une méthode selon la revendication 4 où l'acide et un acide organique.

6. Une méthode selon la revendication 4 o+u la revendication 5 ou l'acide possède un bon effet tampon.

7. Une méthode selon n'importe laquelle des revendications précédentes où le pH du liquide résultant est réduit à un pH inférieur à 4. 5.

8. Une méthode selon n'importe laquelle des revendications précédentes où l'étape de lactose hydrolysé comprend l'utilisation d'une enzyme.

9. Une méthode selon la revendication 8 où l'enzyme fonctionne de façon optimale en dessous d'un pH de 4. 5.

10. Une méthode selon la revendication 9 où l'étape de réduction du pH est exécutée avant l'étape du processus de lactose hydrolysé en utilisant l'enzyme.

11. Une méthode selon la revendication 10 où la protéine provient du lactosérum et de la protéine de soja

12. Une méthode selon n'importe laquelle des revendications précédentes où le liquide possède une concentration de 30 % du poids par volume ou plus.

13. Une méthode selon l'importe laquelle des revendications précédentes comprenant l'étape qui consiste à ajouter au moins un polymérique de sucre au liquide.

14. Une méthode selon les revendications 1 à 12 comprenant l'étape qui consiste à recombiner certains des sucres simples par le lactose hydrolysé pour créer des polymériques de sucre.

15. Une méthode selon la revendication 13 où la revendication 14 où le polymérique de sucre est un oligosaccharide.
